# EUROPEAN PATENT SPECIFICATION

(11) **EP 1 136 903 B1**
(45) Date of publication and mention of the grant of the patent: **11.04.2007**
(21) Application number: 01480017.1
(22) Date of filing: 27.02.2001
(51) Int. Cl.: G06F 21/00

(54) **Method and system of reversibly marking a text document with a pattern of extra blanks for authentication**
Verfahren und System zur reversiblen Markierung eines Textdokuments mit einem Muster der zusätzlichen Leerzeichen für Beglaubigung
Procédé et système de marquage réversible d'un document de texte avec extra blancs utilisés pour l'authentification

(30) Priority: 20.03.2000 EP 00480030
(43) Date of publication of application: 26.09.2001
(73) Proprietor: International Business Machines Corporation, Armonk, NY 10504 (US)
(72) Inventor: Incertis Carro, Fernando, 46182 Valencia (ES); Matyas, Stephen, Manassa, VA 20110 (US)
(74) Representative: Etorre, Yves Nicolas

(56) References cited:
- EP-A- 0 782 322
- US-A- 5 388 194
- BENDER W ET AL: "TECHNIQUES FOR DATA HIDING" IBM SYSTEMS JOURNAL, IBM CORP. ARMONK, NEW YORK, US, vol. 35, no. 3/4, 1996, pages 313-335, XP000635079 ISSN: 0018-8670

## Description

### Field of the Invention

The present invention relates to the field of document authentication. It is more specifically concerned with the authentication of soft-copy text documents.

### Background of the Invention

In the current environment of computer networks characterized by an exponential growth in the circulation of soft-copy or electronic text documents such as e-mail over unsecured media e.g., the Internet, a key issue is authentication. It should be possible for the recipient of a text document to make sure of its origin so that no one should be able to masquerade as someone else. Also, it should be possible to verify it has not been modified, accidentally on maliciously, en route. To this end methods have been devised to perform authentication.

The standard solution, which fits well with electronic text documents, consists in adding a MAC or Message Authentication Code to soft-copy text documents. A MAC is a digest computed with a one-way hash function over the text and which is also made dependent on a key e.g., a secret-key known only to the sender and the receiver in order this latter can check first, that what it received has well been originated by whom shares the secret-key with it and second, that the document has not been altered. For example, Secure Hash Algorithm or SHA specified by the National Institute of Standards and Technologies, NIST, FIPS PUB 180-1, "Secure Hash Standard", US Dpt of Commerce, May 93, produces a 160-bit hash. It may be combined with a key e.g., through the use of a mechanism referred to as HMAC or Keyed-Hashing for Message Authentication, subject of the RFC (Request For Comment) of the IETF (Internet Engineering Task Force) under the number 2104. HMAC is devised so that it can be used with any iterative cryptographic hash function thus, including SHA. Therefore, a MAC can be appended to the soft-copy of a text document so as the whole can be checked by the recipient. Thus, this method assumes the addition of checking information to a file which has the inconvenience of indeed separating text and checking information. Hence, this latter can easily be isolated and removed intentionally, in an attempt to cheat, or accidentally just because intermediate pieces of equipment in charge of forwarding the electronic documents are not devised to manipulate this extra piece of information. Then, the checking information should rather be encoded transparently into the body of the text document itself i.e., in a manner that does not affect text readability whatsoever, so that it remains intact across the various manipulations it is exposed to on its way to destination still enabling the end-recipient to authenticate the document.

Another type of approach to authentication, which applies mainly to soft-copy images (which thus may also be used on the image of a text document), consists in hiding data into their digital representation therefore, meeting the above requirement that checking information should better be merged into the document itself. Data hiding in images has received a considerable attention mainly because of the copyrights attached to digital multimedia materials which can easily be copied and distributed everywhere through the Internet and networks in general. A good review of data hiding techniques is in 'Techniques for data hiding' by W. Bender and al. published in the IBM Systems Journal, Vol. 35, Nos 3&4, 1996. As an illustration to the way data hiding may be carried out the most common form of high bit-rate encoding, reported in here above paper, is the replacement of the least significant luminance bit of image data with the embedded data. This technique which indeed meets the requirement of being imperceivable (the restored image is far to be altered to a point where this would become noticeable) may serve various purposes, similar to authentication including watermarking, aimed at placing an indelible mark on an image or tamper-proofing, to detect image alterations especially, through the embedding of a MAC into the soft-copy image.

However, having to consider a text as an image would be a very costly and inadequate solution in term of storage and bandwidth necessary to transmit it. Although, as stated in here above paper, soft-copy text is in many ways the most difficult place to hide data due to the lack of redundant information in a text file as compared to a picture the manipulation of white spaces i.e., blank characters and more specifically inter-word blank characters purposely inserted by the originator of a text document, in excess of what is strickly necessary to make a text readable (i.e., one blank between any two words), is the most simple way of marking a text that is susceptible to be authenticated without the addition of a separated MAC since the information necessary for the checking is then imbedded, somehow hidden, into the text itself, under the form of extra inter-word blanks, that the casual reader is unlikely to take notice of. Moreover, ideally (even though text is readable), the end recipient of the document should also be able to reformat the original text document exactly as it was created. Also, the addition of extra blanks should be conducted in such a way that code breakers see their job much complicated by not being able to determine in advance which ones of the extra inserted blanks, present in the coded text, are really holding the authentication data.

Therefore it is a broad object of the invention to provide a method to merge the information necessary to authenticate a text document, into the body of the document itself, under the form of extra inter-word blanks.

It is another object of the invention to permit that the recipient of the document be able to restore exactly the format, including the number of blanks, of the original text.

It is still another object of the invention to merge the extra blanks, actually carrying the authentication data, with dummy blanks so as to even confuse more an attacker.

Further objects, features and advantages of the present invention will become apparent to the ones skilled in the art upon examination of the following description in reference to the accompanying drawings. It is intended that any additional advantages be incorporated herein.

### Summary of the Invention

A method of marking an original text document which consists in altering the numbers of existing inter-word blank characters of the text is disclosed. First, a reversible transform is applied over the original text document in order that all inter-word intervals become exclusively comprised of odd numbers of blank characters. Then, transformed original text is split into a first and a second subset of words including their trailing inter-word intervals. An authentication pattern, fitting the number of inter-word intervals in the first subset, is then computed using the original text document and a secret-key as inputs. Hence, inter-word blank characters are added in positions corresponding to the authentication pattern. After which, from the canonical form (i.e., a form of text in which all inter-word blank characters in excess of one are stripped off) of the first subset and the secret-key, a blurring pattern is computed which fits the number of inter-word intervals too so that the numbers of inter-word blank characters are further modified thus, blurring the authentication pattern just added in first subset. Although it does not contain the authentication pattern the second subset is blurred too, in a similar way before recombining the first and the second subset thus, obtaining a marked text susceptible of authentication.

A method of authenticating a text document marked according to the here above method is also disclosed. First step consists in splitting the marked text document to retrieve the first and the second subset of words and intervals. Then, the effect of the blurring pattern is removed in both subsets. This also permits to extract the authentication pattern, that was imbedded in first subset, after which subsets are recombined. At this stage all inter-word intervals are comprised of odd numbers again and the transform used by the first method is reversed so that the exact format of the original text is recovered. Finally, as in first method, an authentication pattern is further computed which is compared with the authentication pattern extracted here above. If matching, marked text is known to be authentic.

A system carrying out the methods of the invention is also disclosed. Methods and system per the invention permit that a text document be authenticable while authentication pattern is imbedded, and deeply hidden, into the text document itself and exact original format, including the numbers of inter-word blanks, restored by the recipient.

### Brief Description of the Drawings

- **Figure 1**: shows the conventions adopted to describe the invention.
- **Figure 2**: depicts G function used to carry out the invention.
- **Figure 3**: describes the overall process to mark a text document.
- **Figure 4**: focuses on the transform utilized to obtain odd inter-word intervals.
- **Figure 5**: shows how text document can be split into a first and a second subset.
- **Figure 6**: depicts the process of imbedding the authentication and blurring patterns into first subset.
- **Figure 7**: describes the overall process to authenticate a marked text document.

### Detailed Description of the Preferred Embodiment

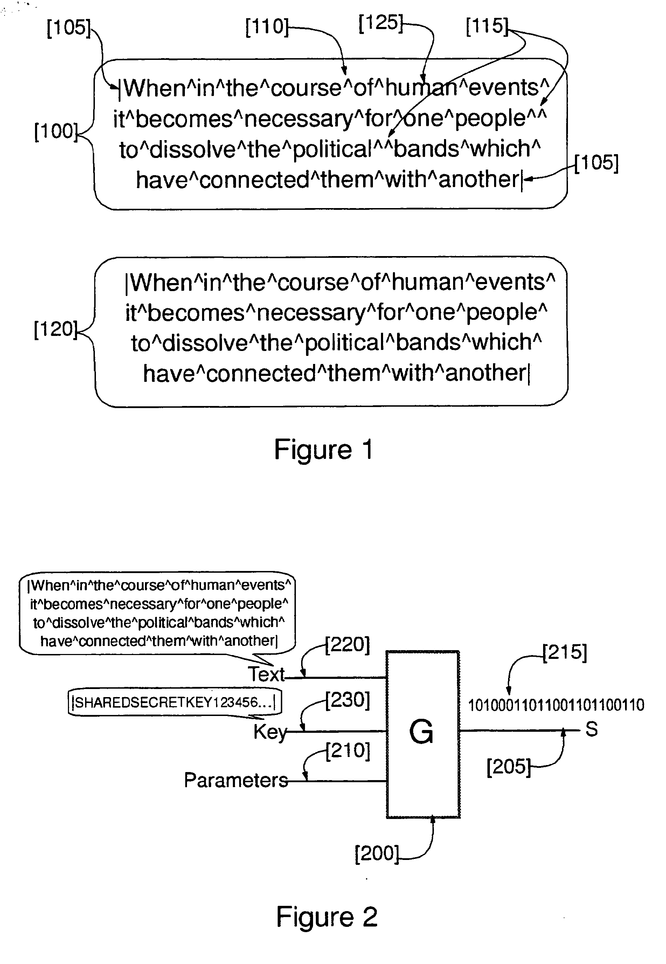

**Figure 1** depicts what conventions are used in the rest of the description and what is the canonical form [120] of a text per the invention. To describe the invention, a text [100] is shown to be starting and ending with a delimiter i.e., a vertical bar [105]. This delimiter is not part of the text itself and is just here to bind it unambiguously. Similarly, words are separated by blanks which are shown with a caret sign [110]. Thus, a text is made of words e.g., [125] and inter-word intervals comprising at least one blank [110] although more blanks may be found [115] which does not affect readability though. Canonical form of a text [120] is just the original form of the text [100], from which all inter-word blanks in excess of one [115] have been removed.

**Figure 2** shows a function G [200], needed to carry out the invention, which can be implemented in many ways from techniques and methods well known by those skilled in the art. Irrespective of the way function G is actually implemented it is assumed to be able to generate an output S [205] which is made dependent upon three types of entries. First, S is made dependent upon an input text [220], like the ones shown in figure 1. Second, output S must also depend on a key [230], shared by the parties involved in the authentication process. Third, of a set of parameters [210], aimed at conditioning the way function G must process input text and key especially, specifying what type and format of output S are expected in a particular instance of the function. As an example of the way function G is used by the invention, canonical form of the text already shown in figure 1 [220], assumed to be ASCII coded, is the input text. Key is e.g., an alphanumeric text string [230] that must be kept secret. Then, parameter [210] may be set to instruct function G to produce for instance, a string of 23 binary bits [215]. Those skilled in the art will recognize that function G, such as described here above, could be implemented, for example, from a one-way hash function aimed at producing a unique digest of the input text and secret key, also made dependent of input parameters, such as the number of expected bits so that output S can be tailored to fit in any particular step of the invention described in the following figures. One-way hash functions, which carry many other names like compression function, message digest, have received a considerable attention and are central to modern cryptography. A good review of this subject can be found in 'Applied Cryptography' a book authored by Bruce Schneier and published by John Wiley & Sons, 2nd edition, 1996. What is specific in the hash function needed to carry out the invention, with respect to the general description that exists in the here above book and in the abundant literature on the subject, is that it must accept input parameters on top of the standard input text and key especially, to allow the size of the output to be tailored to fit a particular instance of the function. Although this is different of standard hash functions, which generally produce a fixed-size digest of a keyed-text, this does not raise any outstanding problem to those skilled in the art to devise such a function either, as suggested above, from a standard hash function or through any alternate method that would better fit in a particular implementation of the invention.

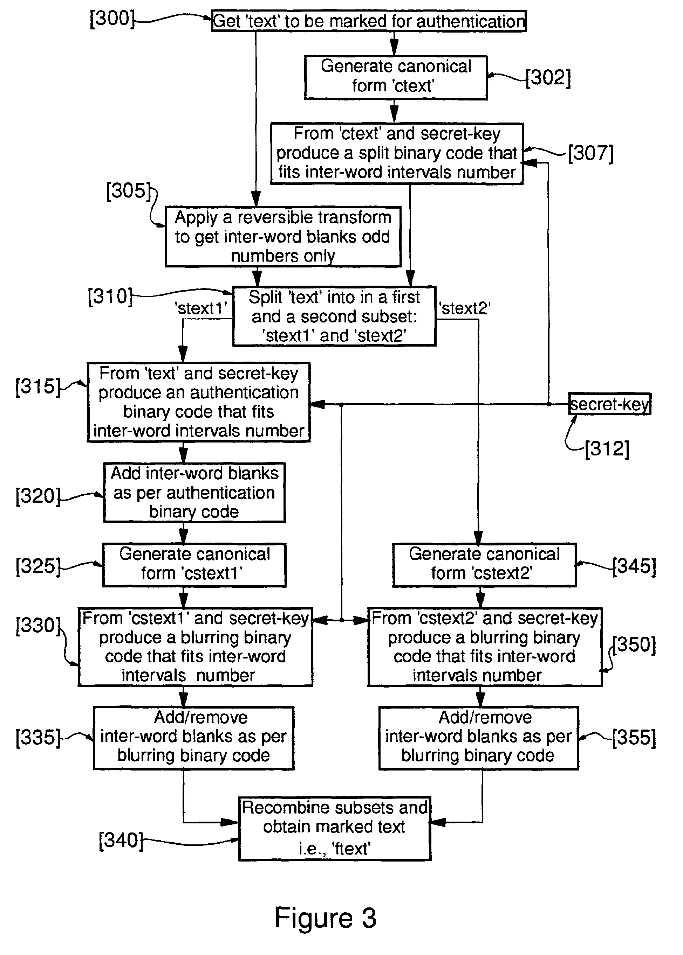

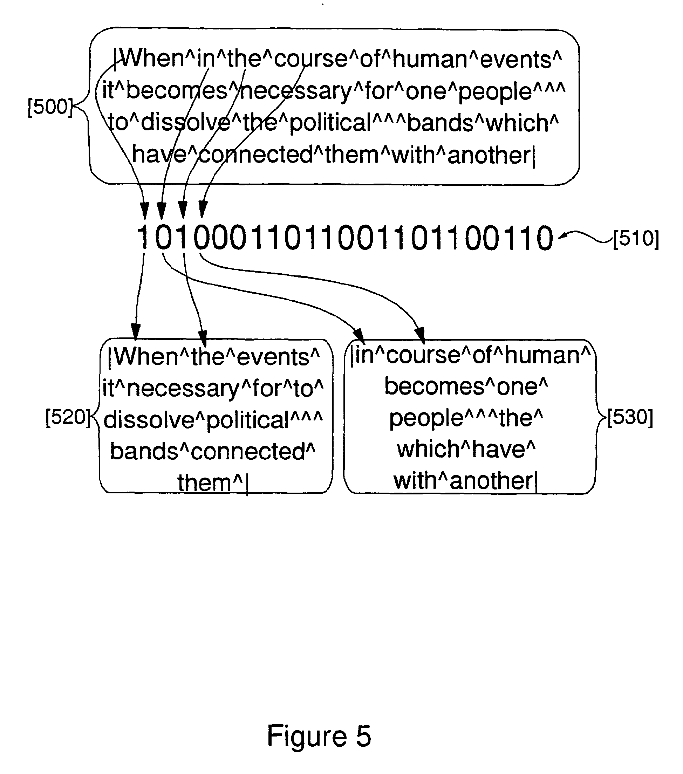

**Figure 3** shows the main steps of the method per the invention. Method starts with a text [300] to be marked for authentication. First, one applies a reversible transform [305] in order that all inter-word intervals become comprised of an odd number of blanks. One way of achieving this is to add, to the number N of existing blanks, N-1 extra blanks so that if there is one inter-word blank between two words (the general case) it is unchanged after the transformation. If however, there are two blanks then, one adds two minus one i.e., one extra blank to the two existing ones thus, obtaining an odd three-blank interval. And so on. Therefore, at completion of step [305] 'text' is transformed so as it is only comprised of odd numbers of inter-word blanks. Then, transformed text is split [310] into two subsets 'stext1' and 'stext2' of randomly selected words with their associated trailing blanks. This step, which is further described in figure 5 hereafter, is carried out using the canonical form of text [300] generated at step [302] and a secret-key [312] as inputs, over the transformed text obtained at step [305]. Next step [315] consists in producing an authentication binary code i.e., a binary vector, length of which matches the number of inter-word intervals of 'stext1'. This is achieved in using function G described in figure 2. Code is used to insert more inter-word blanks e.g., to the position matching the ones (one may decide to use the zeros as well) of the binary vector so as the number of inter-word blanks that were all odd are now either odd and even. At this point text would be authenticable by the recipient however, to make much more difficult to an attacker the task of breaking the code, the number of inter-word blanks are further altered so as to blur the pattern of inter-word blanks. To this end, starting from the canonical form of the 'stext1' namely 'cstext1', obtained at step [325], and the secret-key another binary vector, aimed at blurring the here above authentication pattern of blanks, is generated at step [330], in a manner similar to step [315]. Then, blurring binary vector is used at step [335] in such a way that for each inter-word position of 'stext1' corresponding e.g., to a one, if the number of blanks is odd (1,3,..) then one adds one extra blank however, if number is even (2, 4, ..) one removes one blank instead. This prevents the authentication code from being directly readable.

As far as blurring steps are concerned the same process is applied to the second subset 'stext2'. Steps [345], [350] and [355] are thus identical to the equivalents steps just described for 'stext1'.

When done, marked and blurred 'stext1' and blurred 'stext2', are recombined [340] in a manner reverse to what was done at step [310] where transformed text, obtained at step [305], was split therefore, obtaining a marked text 'ftext' that can be authenticated. This last step obviously assumes that the manner split was done at step [310] be remembered so that the words (and trailing blanks) be recombined in the right order.

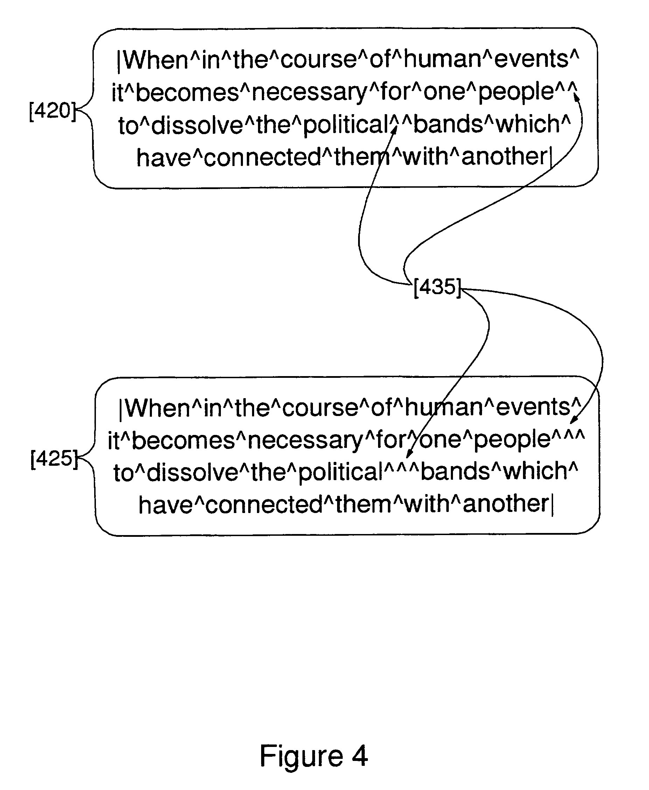

**Figure 4** illustrates in more details step [305] of figure 3 where the number of text inter-word blanks is transformed so as to get only odd numbers of blanks between any two words. In this example the function utilized to transform text [420] into text [425] adds N-1 extra blanks to the N existing blanks which results, with this particular text [420], to changing from two to three the number of blanks in only two positions [435] .

**Figure 5** focuses mainly on step [310] also referring to steps [302] and [307] of figure 3 from where text [500] is split. Although many alternate equivalent ways are possible for these steps function G, described in figure 2, is used too in a preferred embodiment of the invention. That is, using the canonical form of text and the shared secret-key as inputs, function G is set to generate a split binary vector [510] fitting the number of inter-word text intervals.

It is worth noting here that whichever method is actually used to split a text it must provide, for a given combination of 'ctext' and secret-key, a unique manner of splitting the text so that the recipient of an authenticated text marked according to the method of the invention will be able upon reception to obtain the same split. In practice, this requires that, in the preferred embodiment of the invention which uses function G previously described, that input parameters to be used be agreed upon in advance (or the method of unambiguously determining them) between the sender and the receiver.

Then, using the split binary vector [510], words and associated trailing blanks, corresponding to the asserted bit of the vector are said to belong to a subset e.g., 'stext1' [520] while those corresponding to non asserted bits are said to belong to the other subset 'stext2' [530]. As already mentioned above, split binary vector [510] must be remembered to allow proper recombination of subsets as described at step [340] of figure 3.

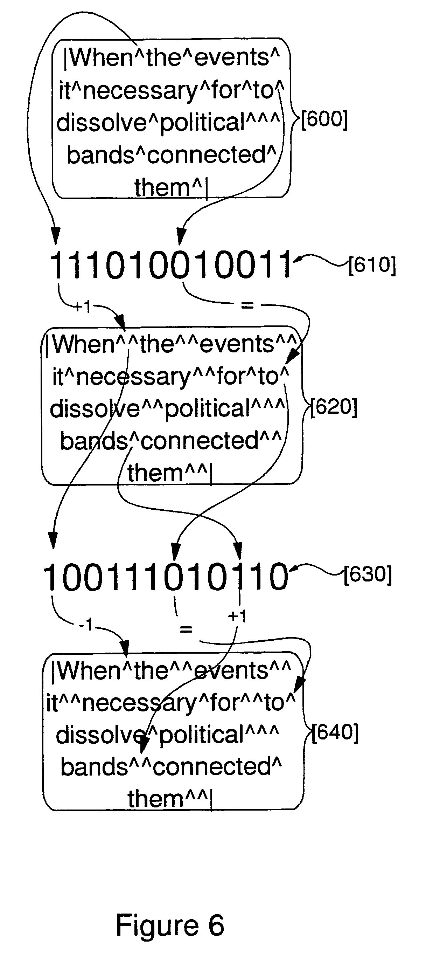

**Figure 6** illustrates how inter-word blanks are modified at steps [320] and [335] of figure 3 which respectively merge the authentication vector [610] computed at step [315] and the blurring vector [630] computed at step [330]. Subset of text ('stextl') having only odd inter-word blank numbers [600], and obtained as explained in figure 5, is further modified. Extra blanks are inserted corresponding to the asserted bits of the authentication vector [610] thus, producing text [620]. This latter text is in turn modified with the blurring vector [630] which adds, in the positions corresponding to the asserted bit of the vector, one extra blank if the number of blanks is odd, and removes one blank if the number of blanks is even. The result of this transformation is text [640].

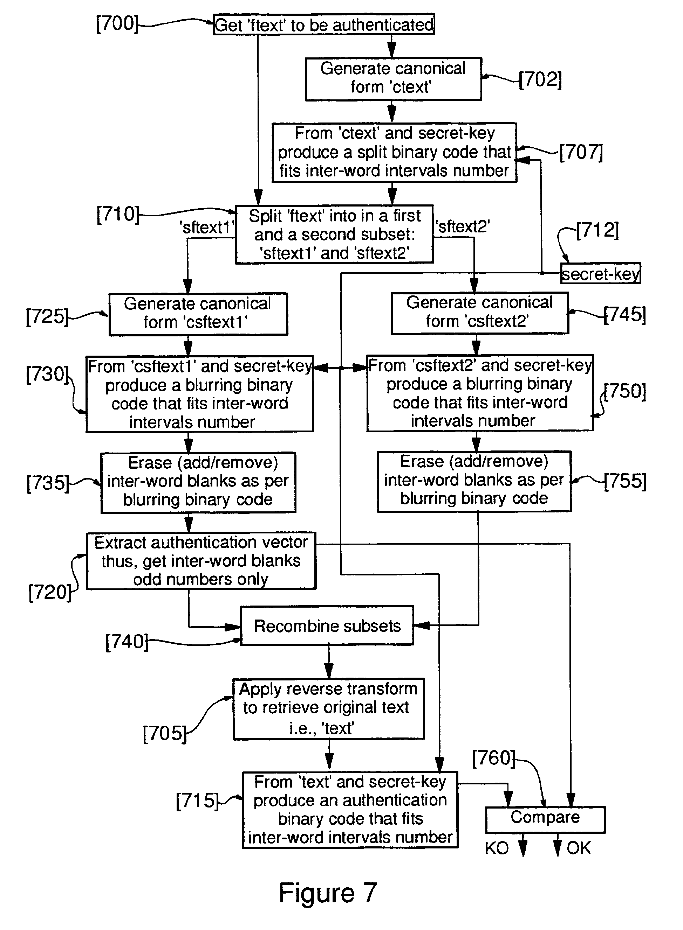

**Figure 7** depicts the authentication process to be applied on a text which is assumed to have been marked according to the overall method described in figure 3. It is roughly the reverse of what is shown in this latter figure and allows to recover the text exactly as it was formatted by sender. Hence, process starts when 'ftext' to be authenticated is received [700]. Canonical form of this text is produced at step [702] thus, obtaining 'ctext' which when used with the shared secret-key [712] at step [707] allow to split 'ftext' into a first subset 'sftext1' and a second subset 'sftext2' of words with their trailing blanks at step [710]. Although trailing blank numbers would be generally different the result of the split operation must be obviously identical, as far as words split is concerned, to what was obtained at corresponding step [310] in figure 3 provided secret-key is indeed the same. Then, next step [725] consists in generating a canonical form of 'sftext1' i.e., 'csftext1' which when used with secret-key with function G [730] allows to generate a blurring vector which is used at next step [735] to erase (to reverse) what was done at step [335] of figure 3 to hide the authentication code. At this point, authentication vector, computed by the originator of the text, can be extracted at step [720] in reversing all the inter-word blank numbers to their closest odd number value. That is, removing a blank if even, none if odd therefore, getting an extracted authentication vector, asserted bits of which correspond to where blank characters had to be removed.

Similarly to steps [725], [730] and [735] steps [745], [750] and [755] are done on 'sftext2' to erase the effect of the blurring vector on the other subset too.

Then, the two subsets are recombined [740] to get back the text, comprised of odd intervals only. This is followed [705] by the application of the reverse transform used at step [305] allowing to retrieve the original text i.e., 'text' exactly as it was formatted by the originator. Therefore, the last steps consists in authenticating 'text' by computing from it and the secret-key an authentication binary vector [715] which, when compared [760] to the one resulting of step [720] must match to authenticate 'text'. If not, text is rejected as being not authentic.

## Claims

1. A method of marking an original text document [300], said original text document comprised of words [125] separated by inter-word intervals, said inter-word intervals including one [110] or more [115] blank characters, said method consisting in altering the numbers of said blank characters, said method comprising the steps of:
applying a reversible transform [305] over said original text document in order that all said inter-word intervals become exclusively comprised of odd numbers of said blank characters [425];
splitting [310] transformed said original text document into a first subset [520] and a second subset [530] of said words including the trailing said inter-word intervals of said words;
and, over said first subset:
computing [315], from said original text document and a secret-key [312], an authentication pattern [610] that fits the number of said intervals of said first subset;
adding [320] inter-word blank characters in positions corresponding to said authentication pattern;
generating [325] canonical form of said first subset;
computing [330], from said canonical form of said first subset and said secret-key, a blurring pattern [630] that fits the number of said intervals of said first subset;
modifying [335] the numbers of inter-word blank characters according to said blurring pattern;
and, over said second subset:
generating [345] canonical form of said second subset;
computing [350], from said canonical form of said second subset and said secret-key, a blurring pattern that fits the number of said intervals of said second subset;
modifying [355] the numbers of inter-word blank characters according to said blurring pattern;
recombining [340] said first subset and said second subset thereby, obtaining a marked text for authentication.

2. A method of authenticating a marked text document [700], said marked text document comprised of words [125] separated by inter-word intervals, said inter-word intervals including one [110] or more [115] blank characters, said method consisting in checking the numbers of said blank characters, said method comprising the steps of:
splitting said marked text document [710] into a first subset and a second subset of said words including the trailing said inter-word intervals of said words;
and, over said first subset:
generating [725] canonical form of said first subset;
computing [730], from said canonical form of said first subset and a secret-key [712], a blurring pattern that fits the number of said intervals of said first subset;
erasing [735] modifications brought to the numbers of said inter-word blank characters per said blurring pattern;
extracting [720] an authentication pattern thereby, obtaining in all said inter-word intervals odd numbers of blank characters;
and, over said second subset:
generating [745] canonical form of said second subset;
computing [750], from said canonical form of said second subset and said secret-key [712], a blurring pattern that fits the number of said intervals of said second subset;
erasing [755] modifications brought to the numbers of said inter-word blank characters per said blurring pattern thereby, obtaining in all said inter-word intervals odd numbers of blank characters;
recombining said first subset and said second subset;
applying a reverse transform [705] thus, retrieving said original text document;
computing [715], from retrieved said original text document and said secret-key [712], an authentication pattern that fits the number of said intervals of retrieved said original text document;
comparing [760] extracted said authentication pattern [720] and computed said authentication pattern [715];
if matching exactly:
accepting said marked text document as authentic;
if not:
rejecting said marked text document as fake.

3. The method of anyone of the previous claims wherein splitting steps [310] [710] includes the preliminary steps of:
generating [302] [702] a canonical form of a text document;
computing [307] [707], from said canonical form of said text document and said secret-key, a splitting pattern [510] that fits the number of said intervals of said text document;
thereby, allowing to split and to recombine said text document [300] [700] on the basis of asserted and non-asserted bits of said splitting pattern.

4. The method according to any one of the previous claims wherein said authentication pattern [610], said blurring pattern [630] and said splitting pattern [510] are binary vectors comprised of a number of bits matching the number of corresponding said inter-word intervals.

5. The method according to any one of the previous claims wherein said canonical form [120] is obtained in stripping all blank characters, in excess of one, off said inter-word intervals.

6. The method according to any one of the previous claims wherein modifying steps include:
in the positions corresponding to the asserted bits of said blurring patterns:
adding one blank character if said inter-word intervals are comprised of an odd number of said blank characters;
removing one blank character if said inter-word intervals are comprised of an even number of said blank characters.

7. The method according to any one of the previous claims wherein modifying steps and erasing steps perform identically.

8. The method according to any one of the previous claims wherein extracting step includes:
removing one blank character in those of said inter-word intervals that are comprised of an even number of said blank characters;
obtaining a binary authentication vector with asserted bits corresponding to positions where said blank characters were removed.

9. An authentication system, in particular a system for authenticating text document, comprising means adapted for carrying out the method according to any one of the previous claims.

10. A computer-like readable medium comprising instructions for carrying out the method according to any one of the claims 1 to 8.

## Patentansprüche

1. Verfahren zur Markierung eines Original-Textdokumentes [300], das aus Wörtern [125] besteht, die durch Zwischenwort-Intervalle getrennt sind, wobei die Zwischenwort-Intervalle ein [110] oder mehrere [115] Leerzeichen umfassen, wobei das Verfahren in der Veränderung der Anzahl dieser Leerzeichen besteht und die folgenden Schritte umfasst:
Anwenden einer reversiblen Transformation [305] auf das Original-Textdokument, damit alle Zwischenwort-Intervalle ausschließlich aus einer ungeraden Anzahl von Leerzeichen bestehen [425];
Aufteilen [310] des transformierten Original-Textdokumentes in eine erste Teilmenge [520] und eine zweite Teilmenge [530] der Wörter einschließlich der endseitigen Zwischenwort-Intervalle dieser Wörter;
und, für die erste Teilmenge:
Berechnen [315] eines Identitätsprüfungsmusters [610] aus dem Original-Textdokument und einem Geheimschlüssel [312], das zur Zahl der Intervalle der ersten Teilmenge passt;
Hinzufügen [320] von Zwischenwort-Leerzeichen an Stellen, die dem Identitätsprüfungsmuster entsprechen;
Erzeugen [325] der kanonischen Form der ersten Teilmenge;
Berechnen [330] eines Verfälschungsmusters [630] aus der kanonischen Form der ersten Teilmenge und dem Geheimschlüssel, das der Anzahl der Intervalle der ersten Teilmenge entspricht;
Verändern [335] der Anzahl der Zwischenwort-Leerzeichen gemäß dem Verfälschungsmuster;
und, für die zweite Teilmenge:
Erzeugen [345] der kanonischen Form der zweiten Teilmenge;
Berechnen [350] eines Verfälschungsmusters aus der kanonischen Form der zweiten Teilmenge und dem Geheimschlüssel, das der Zahl der Intervalle der zweiten Teilmenge entspricht;
Verändern [355] der Anzahl der Zwischenwort-Leerzeichen gemäß dem Verfälschungsmuster;
Wiederzusammenführen [340] der ersten und zweiten Teilmenge, um einen für den Nachweis der Identität markierten Text zu erhalten.

2. Verfahren zum Nachweis der Identität eines markierten Textdokumentes [700], wobei das Textdokument aus Wörtern [125] besteht, die durch Zwischenwort-Intervalle getrennt sind, wobei die Zwischenwort-Intervalle ein [110] oder mehrere [115] Leerzeichen umfassen, wobei das Verfahren in der Prüfung der Anzahl der Leerzeichen besteht und das Verfahren die folgenden Schritte umfasst:
Aufteilung des markierten Textdokumentes [710] in eine erste und zweite Teilmenge von Wörtern einschließlich der Zwischenwort-Intervalle am Wortende;
und für die erste Teilmenge:
Erzeugen [725] einer kanonischen Form der ersten Teilmenge;
Berechnen [730] eines Verfälschungsmusters aus der kanonischen Form der ersten Teilmenge und einem Geheimschlüssel [712], das der Anzahl der Intervalle der ersten Teilmenge entspricht;
Löschen [735] von Veränderungen, die das Verfälschungsmuster für die Anzahl der Zwischenwort-Leerzeichen bewirkt hat;
dadurch Ableiten [720] eines Identitätsprüfungsmusters, womit in allen Zwischenwort-Intervallen eine ungerade Anzahl von Leerzeichen entsteht;
und für die zweite Teilmenge:
Erzeugen [745] einer kanonischen Form der zweiten Teilmenge;
Berechnen [750] eines Verfälschungsmusters aus der kanonischen Form der zweiten Teilmenge und dem Geheimschlüssel [712], das der Anzahl der Intervalle der zweiten Teilmenge entspricht;
Löschen [755] der Veränderungen, die das Verfälschungsmuster für die Anzahl der Zwischenwort-Leerzeichen bewirkt hat, womit in allen Zwischenwort-Intervallen eine ungerade Anzahl von Leerzeichen entsteht;
Wiederzusammenführen der ersten und zweiten Teilmenge;
Anwenden einer Umkehrtransformation [705], um das Original-Textdokument wiederzugewinnen;
Berechnen [715] eines Identitätsprüfungsmusters aus dem wiedergewonnenen Original-Textdokument und dem Geheimschlüssel [712], das der Anzahl der Intervalle des wiedergewonnenen Original-Textdokumentes entspricht;
Vergleichen [760] des abgeleiteten Identitätsprüfungsmusters [720] und des berechneten Identitätsprüfungsmusters [715];
falls beide genau übereinstimmen:
Annehmen des markierten Textdokumentes als echt;
Falls nicht:
Zurückweisen des markierten Textdokumentes als gefälscht.

3. Verfahren nach einem der vorangehenden Ansprüche, wobei die Aufteilungsschritte [310] [710] folgende Vorab-Schritte beinhaltet:
Erzeugen [302] [702] einer kanonischen Form eines Textdokumentes;
Berechnen [307] [707] eines Aufteilungsmusters [510] aus der kanonischen Form des Textdokumentes und dem Geheimschlüssel, das der Anzahl der Intervalle des Textdokumentes entspricht;
dadurch Ermöglichen, dass das Textdokument [300] [700] anhand der gesetzten und nicht gesetzten Bits des Teilungsmusters aufgeteilt und wieder zusammengeführt wird.

4. Verfahren nach einem der vorhergehenden Ansprüche, wobei das Identitätsnachweismuster [610], das Verfälschungsmuster [630] und das Teilungsmuster [510] binäre Vektoren sind, die aus einer Anzahl von Bits bestehen, die der Anzahl der zugehörigen Zwischenwort-Intervalle entspricht.

5. Verfahren nach einem der vorhergehenden Ansprüche, wobei die kanonische Form [120] entsteht, indem alle Leerzeichen der Zwischenwort-Intervalle bis auf eines entfernt werden.

6. Verfahren nach einem der vorhergehenden Ansprüche, worin die Änderungsschritte Folgendes beinhalten:
an den Stellen, die den gesetzten Bits der Verfälschungsmusters entsprechen:
Hinzufügen eines Leerzeichens, falls die Zwischenwort-Intervalle aus einer ungeraden Anzahl von Leerzeichen bestehen.
Entfernen eines Leerzeichens, falls die Zwischenwort-Intervalle aus einer geraden Anzahl von Leerzeichen bestehen.

7. Verfahren nach einem der vorhergehenden Ansprüche, worin die Ändern- und Löschen-Schritte gleichartig ablaufen.

8. Verfahren nach einem der vorhergehenden Ansprüche, worin die Ableitungsschritte umfassen:
Entfernen eines Leerzeichens in diesen Zwischenwort-Intervallen, die aus einer geraden Anzahl von Leerzeichen bestehen;
Erhalten eines binären Identitätsnachweisvektors mit gesetzten Bits an Stellen, an denen Leerzeichen entfernt wurden.

9. Identitätsnachweissystem, insbesondere ein System für den Nachweis der Identität eines Textdokumentes, das Mittel umfasst, die zur Ausführung des Verfahrens nach einem der vorherigen Ansprüche in der Lage ist.

10. Von Computern oder dergleichen lesbares Medium, das Anweisungen zur Ausführung des Verfahrens nach einem der vorhergehenden Ansprüche 1 bis 8 umfasst.

## Revendications

1. Procédé consistant à marquer un document de texte d'origine [300], ledit document de texte d'origine comprenant des mots [125] séparés par des intervalles entre les mots, lesdits intervalles entre les mots comprenant un [110] ou plusieurs [115] caractères vides, ledit procédé consistant à modifier les nombres desdits caractères vides, ledit procédé comprenant les étapes consistant à :
appliquer une transformation réversible [305] sur ledit document de texte d'origine de sorte que tous lesdits intervalles entre les mots deviennent exclusivement constitués de nombres impairs desdits caractères vides [425],
séparer [310] ledit document de texte d'origine transformé en un premier sous-ensemble [520] et un second sous-ensemble [530] desdits mots comprenant le suivi desdits intervalles entre les mots desdits mots,
et, sur ledit premier sous-ensemble :
calculer [315], à partir dudit document de texte d'origine et d'une clé secrète [312], une séquence d'authentification [610] qui correspond au nombre desdits intervalles dudit premier sous-ensemble,
ajouter [320] des caractères vides entre les mots dans des positions correspondant à ladite séquence d'authentification,
générer [325] une forme canonique dudit premier sous-ensemble,
calculer [330], à partir de ladite forme canonique dudit premier sous-ensemble et de ladite clé secrète, une séquence de brouillage [630] qui correspond au nombre desdits intervalles dudit premier sous-ensemble,
modifier [335] les nombres des caractères vides entre les mots conformément à ladite séquence de brouillage,
et, sur ledit second sous-ensemble :
générer [345] une forme canonique dudit second sous-ensemble,
calculer [350], à partir de ladite forme canonique dudit second sous-ensemble et de ladite clé secrète, une séquence de brouillage qui correspond au nombre desdits intervalles dudit second sous-ensemble,
modifier [355] les nombres des caractères vides entre les mots conformément à ladite séquence de brouillage,
recombiner [340] ledit premier sous-ensemble et ledit second sous-ensemble, en obtenant ainsi un texte marqué pour l'authentification.

2. Procédé d'authentification d'un document de texte marqué [700], ledit document de texte marqué comprenant des mots [125] séparés par des intervalles entre les mots, lesdits intervalles entre les mots comprenant un [110] ou plusieurs [115] caractères vides, ledit procédé consistant à vérifier les nombres desdits caractères vides, ledit procédé comprenant les étapes consistant à :
séparer ledit document de texte marqué [710] en un premier sous-ensemble et un second sous-ensemble desdits mots comprenant le suivi desdits intervalles entre les mots desdits mots,
et, sur ledit premier sous-ensemble :
générer [725] une forme canonique dudit premier sous-ensemble,
calculer [730], à partir de ladite forme canonique dudit premier sous-ensemble et d'une clé secrète [712], une séquence de brouillage qui correspond au nombre desdits intervalles dudit premier sous-ensemble,
effacer [735] des modifications apportées aux nombres desdits caractères vides entre les mots par ladite séquence de brouillage,
extraire [720] une séquence d'authentification, en obtenant ainsi dans tous lesdits intervalles entre les mots des nombres impairs de caractères vides,
et, sur ledit second sous-ensemble,
générer [745] une forme canonique dudit second sous-ensemble,
calculer [750], à partir de ladite forme canonique dudit second sous-ensemble et de ladite clé secrète [712], une séquence de brouillage qui correspond au nombre desdits intervalles dudit second sous-ensemble,
effacer [755] des modifications apportées aux nombres desdits caractères vides entre les mots par ladite séquence de brouillage, en obtenant ainsi dans tous lesdits intervalles entre les mots des nombres impairs de caractères vides,
recombiner ledit premier sous-ensemble et ledit second sous-ensemble,
appliquer une transformation inverse [705], en récupérant ainsi ledit document de texte d'origine,
calculer [715], à partir dudit document de texte d'origine récupéré et de ladite clé secrète [712], une séquence d'authentification qui correspond au nombre desdits intervalles dudit document de texte récupéré,
comparer [760] ladite séquence d'authentification extraite [720] et ladite séquence d'authentification calculée [715],
si elles correspondent exactement :
accepter ledit document de texte marqué comme étant authentique,
si ce n'est pas le cas :
rejeter ledit document de texte marqué comme étant contrefait.

3. Procédé selon l'une quelconque des revendications précédentes, dans lequel les étapes de séparation [310] [710] comprennent les étapes préliminaires consistant à :
générer [302] [702] une forme canonique d'un document de texte,
calculer [307] [707], à partir de ladite forme canonique dudit document de texte et de ladite clé secrète, une séquence de séparation [510] qui correspond au nombre desdits intervalles dudit document de texte,
en permettant ainsi de séparer et de recombiner ledit document de texte [300] [700] sur la base des bits ayant fait l'objet d'une affirmation et des bits n'ayant pas fait l'objet d'une affirmation de ladite séquence de séparation.

4. Procédé selon l'une quelconque des revendications précédentes, dans lequel ladite séquence d'authentification [610], ladite séquence de brouillage [630] et ladite séquence de séparation [510] sont des vecteurs binaires comprenant un certain nombre de bits correspondant au nombre desdits intervalles entre les mots correspondants.

5. Procédé selon l'une quelconque des revendications précédentes, dans lequel ladite forme canonique [120] est obtenue en supprimant tous les caractères vides, dépassant un, desdits intervalles entre les mots.

6. Procédé selon l'une quelconque des revendications précédentes, dans lequel les étapes de modification comprennent :
dans les positions correspondant aux bits ayant fait l'objet d'une affirmation desdites séquences de brouillage :
l'ajout d'un caractère vide si lesdits intervalles entre les mots sont constitués d'un nombre impair desdits caractères vides,
le retrait d'un caractère vide si lesdits intervalles entre les mots sont constitués d'un nombre pair desdits caractères vides.

7. Procédé selon l'une quelconque des revendications précédentes, dans lequel les étapes de modification et les étapes d'effacement s'exécutent de manière identique.

8. Procédé selon l'une quelconque des revendications précédentes, dans lequel l'étape d'extraction comprend les étapes consistant à :
retirer un caractère bide dans ceux desdits intervalles entre les mots qui sont constitués d'un nombre pair desdits caractères vides,
obtenir un vecteur d'authentification binaire comprenant les bits ayant fait l'objet d'une affirmation correspondant aux positions où lesdits caractères vides sont retirés.

9. Système d'authentification, en particulier, système destiné à authentifier un document de texte, comprenant un moyen conçu pour exécuter le procédé conforme à l'une quelconque des revendications précédentes.

10. Support lisible par un ordinateur et analogue, comprenant des instructions destinées à exécuter le procédé conforme à l'une quelconque des revendications 1 à 8.
